# EUROPEAN PATENT SPECIFICATION

(11) **EP 3 843 980 B1**
(45) Date of publication and mention of the grant of the patent: **12.07.2023**
(21) Application number: 19758377.6
(22) Date of filing: 20.08.2019
(51) Int. Cl.: B29C 70/20, B29B 11/16, B29C 70/22, B29C 70/24, B29C 70/88, D03D 11/00, D03D 15/573, D03D 25/00, D03D 15/67

(54) **PRODUCT**
PRODUKT
PRODUIT

(30) Priority: 29.08.2018 GB 201814021
(43) Date of publication of application: 07.07.2021
(73) Proprietor: Qinetiq Limited, Farnborough, Hampshire GU14 0LX (GB)
(72) Inventor: MEEKS, Charlotte B, Malvern, Worcestershire WR14 3PS (GB)
(74) Representative: QINETIQ IP
(86) International application number: PCT/EP2019/072267
(87) International publication number: WO 2020/043553

(56) References cited:
- WO-A1-2006/046008
- CN-A- 107 936 559
- Y. LIU ET AL.: "influence of embedding SMA fibres and SMA fibre surface modification on the mechanical performance of BFRP composite laminates", MATERIALS, 4 January 2018 (2018-01-04), pages 1-18, XP002795627, DOI: 10.3390/ma11010070

## Description

### TECHNICAL FIELD

The present invention relates generally to composite materials and articles comprising or formed from said composite materials. More particularly, the present invention relates to multifunctional composite materials having desirable impact properties. The present invention further relates to preform materials suitable for making said composite materials.

### BACKGROUND

Composite materials having a high strength to weight ratio and a good resistance to impact damage may be made by embedding relatively high modulus fibres together with shape memory alloy (SMA) wires in a relatively low modulus polymer matrix mix. These materials may, for example, be made by producing a fibre and SMA preform and impregnating with polymer, or by layering pre-impregnated plys of fibres and/or wires. These materials are particularly useful in many aerospace, automotive and marine applications, in particular for articles that may be vulnerable to impact damage (e.g. by tool drop, runway debris or bird strike). These composite materials are often used in combination with other materials having other desirable properties to form a complete article meeting all requirements for its intended purpose. It is desirable to provide improved and/or alternative materials for use in fibre reinforced composite materials, which may, for example, be more efficient to manufacture.

The article "Influence of Embedding SMA fibres and SMA surface modification of the mechanical performance of BFRP composite laminates " by Y.LIU et Al., Materials, 4 January 2018 (2018-01-04), pages 1-18, DOI: 10.3390/ma11010070 discloses a composite material comprising a polymer matrix w reinforcing fibres and shape memory alloy wires embedded therein according to the preamble of claim

### SUMMARY

The invention relates to a composite material comprising a polymer matrix with reinforcing fibres and shape memory alloy wires embedded therein, or to a preform comprising shape memory alloy wires according to claim 1.

According to the invention, the oxide coating has an average thickness of at least about 2000 Angstroms.

In certain embodiments of any aspect of the present invention, the composite material or preform comprises a single ply (layer). In certain embodiments of any aspect of the present invention, the composite material or preform comprises two or more plys (layers). In certain embodiments, each ply independently comprises SMA wires and/or reinforcing fibres.

In certain embodiments of any aspect of the present invention, the SMA wires and reinforcing fibres are not woven. In certain embodiments of any aspect of the present invention, the SMA wires and/or reinforcing fibres in each ply are arranged in a single direction (unidirectional preform). In certain embodiments, the single direction in two or more plys is different.

In certain embodiments of any aspect of the present invention, the SMA wires and/or reinforcing fibres are woven to form a two-dimensional (2D) preform.

In certain embodiments of any aspect of the present invention, the SMA wires and/or reinforcing fibres are woven to form a three-dimensional (3D) preform.

Each ply may, for example, independently be unidirectional, 2D or 3D. In certain embodiments, all the plys are unidirectional or all the plys are 2D or all the plys are 3D. Certain embodiments of any aspect of the present invention may provide one or more of the following advantages:
- good impact performance;
- good penetration resistance;
- good inter-laminar properties (e.g. good inter-laminar sheer strength);
- ability to make complex 3D structures in a single piece and process to near net shape;
- good flexural modulus;
- good compressive strength;
- highly porous which may, for example, decrease resin fusion time;
- decreased crimping of reinforcing fibres and/or SMA wires;
- flow of electrical current can be controlled and directed;
- stable to processing techniques (e.g. weaving, curing etc.);
- multifunctional properties.

### BRIEF DESCRIPTION OF THE FIGURES

Aspects of the present invention will be described in more detail, with reference to the appended drawings showing embodiment(s) of the invention.
Figs. 1a, 1b and 1c show cross sectional illustrations of embodiments of the composite material in accordance with the present invention as single ply (plan and side views) and two ply (plan view) respectively.
Fig. 2 shows a preform material in the form of a non crimp fabric possessing four layers and thus showing an example of a quadriaxial fabric.
Figure 3(a) shows an example of a plain pattern in a 2D woven material.
Figure 3(b) shows an example of a twill pattern in a 2D woven material.
Figure 3(c) shows an example of a satin pattern in a 2D woven material.
Figure 3(d) shows an example of a triaxial woven pattern in a 2D woven material.
Figure 4 (a) shows an example a biaxial braided pattern in a 2D braided material.
Figure 4(b) shows an example of a triaxial braided pattern in a 2D braided material.
Figure 5 shows an example of a knitted pattern.
Figure 6(a) shows an example of a 3D orthogonal weave material.
Figure 6(b) shows an example of a 3D angle-interlock weave material.
Figure 6(c) shows an example of a 3D layer-to-layer weave material.
Figure 7 is a schematic diagram illustrating tufting.
Figure 8 shows an exemplary method of z-pinning in which A is the uncured stack of layers of reinforced fibres and/or SMA wires, B is the z-pin preform and C is an ultrasonic hammer.
Figure 9(a) shows an example of a fully-interlaced plain woven material.
Figure 9(b) shows an example of a fully-interlaced twill woven material.
Figure 9(c) shows an example of a fully-interlaced satin woven material.
Figure 10 shows an example of a fully-interlaced braided material.
Figure 11 shows an example of a pattern of a fully-interlaced knitted material.
Figure 12 shows a SEM image of a Ti-Ni SMA wire having a light oxide coating (bottom panel) and a dark oxide coating (top panel).
Figure 13 shows the results of elemental analysis of a Ti-Ni SMA wire having a light oxide coating (LO1_30mm and LO1_2.5mm) and a dark oxide coating (BO1_30mm and BO1_2.5mm).

### DETAILED DESCRIPTION

The present invention may be described with reference to the accompanying drawings, in which currently preferred embodiments of the invention are shown.

There is provided herein a composite material comprising a polymer matrix with reinforcing fibres and shape memory alloy (SMA) wires embedded therein or preform comprising SMA wires that is suitable for forming said composite material, according to claim 1.

The preform may, for example, comprise an uncured polymer. Such material may, for example, be referred to as a prepreg material.

### Dark Oxide Coatings

One or more of the SMA wires in the composite materials and preforms described herein have a dark oxide coating.

In certain embodiments, at least about 20 % of the SMA wires in the composite materials and preforms described herein have a dark oxide. In certain embodiments, at least about 30 % or at least about 40 % or at least about 50 % or at least about 60 % or at least about 70 % or at least about 80 % or at least about 90 % or at least about 95 % or at least about 96 % or at least about 97 % or at least about 98 % or at least about 99 % of the SMA wires in the composite material and preforms described herein have a dark oxide coating. In certain embodiments, all (100 %) of the SMA wires in the composite material and preforms described herein have a dark oxide coating.

The presence of a dark oxide coating can be judged by a person of ordinary skill in the art by colour. SMA wires having a dark oxide coating appear brown or black in colour.

This difference in colour compared to a light oxide coating is due to the difference in thickness of the oxide coating of the wire. According to the invention, the dark oxide coating has an average thickness of at least about 2000 Angstroms.

The oxide coating of the one or more SMA wires having a dark oxide coating may, for example, have an average thickness equal to or less than about 10% of the average thickness of the SMA wire (without the coating). For example, the oxide coating of the one or more SMA wires having a dark oxide coating may be equal to or less than about 9% or equal to or less than about 8% or equal to or less than about 7% or equal to or less than about 6% or equal to or less than about 5% of the average thickness of the SMA wire. For example, the oxide coating of the one or more SMA wires having a dark oxide coating may be equal to or more than about 1% or equal to or more than about 2% or equal to or more than about 3% or equal to or more than about 4% or equal to or more than about 5% of the average thickness of the SMA wire.

The oxide coating of the one or more SMA wires having a dark oxide coating may, for example, have an average thickness equal to or less than about 10,000 Angstroms. For example, the oxide coating may have an average thickness equal to or less than about 9500 Angstroms, for example equal to or less than about 9000 Angstroms, for example equal to or less than about 8500 Angstroms, for example equal to or less than about 8000 Angstroms, for example equal to or less than about 7500 Angstroms, for example equal to or less than about 7000 Angstroms.

The oxide coating of the one or more SMA wires having a dark oxide coating may, for example, have a maximum thickness equal to or less than about 12,000 Angstroms. For example, the oxide coating may have a maximum thickness equal to or less than about 11,500 Angstroms, for example equal to or less than about 11,000 Angstroms, for example equal to or less than about 10,500 Angstroms.

The thickness of the oxide coating may, for example, be measured by obtaining electron microscopy (e.g. scanning electron microscopy) images of the SMA wire and measuring the distance between the edge of the wire and the interface between the oxide and non-oxide layers, which can be seen visually by electron microscopy. Average thickness may, for example, be measured by taking a sample (random or systematic) of thickness measurements and calculating the mean thickness. Alternatively, a spectrometer may be used to measure surface roughness of the wire and this may be equated with coating thickness.

The oxide coating of the SMA wires comprise one or more oxides of one or more of the metals from which the SMA wire is formed. The precise chemical composition of the oxide coating will vary depending on the metal used to make the SMA wire. SMA wires of Ti-Ni alloys have an oxide coating of TiO and NiO. The oxide coating generally comprises more TiO than NiO since Ti is more reactive than Ni.

The composite materials and preforms described herein may, for example, also comprise SMA wires that do not have a dark oxide. The SMA wires that do not have a dark oxide coating may not have any oxide coating. The SMA wires that do not have a dark oxide coating may, for example, have a light oxide coating. A light oxide coating will have a lighter colour than the brown or black oxide coatings of the dark oxide coatings. A light oxide coating may, for example, have an average thickness equal to or less than about 700 Angstroms. For example, the light oxide coating may have an average thickness equal to or less than about 650 Angstroms, for example equal to or less than about 600 Angstroms, for example equal to or less than about 550 Angstroms, for example equal to or less than about 500 Angstroms, for example equal to or less than about 450 Angstroms, for example equal to or less than about 400 Angstroms. The light oxide coating may, for example, have an average thickness equal to or greater than about 100 Angstroms, for example equal to or greater than about 150 Angstroms, for example equal to or greater than about 200 Angstroms, for example equal to or greater than about 250 Angstroms.

Dark oxide coatings generally provide a less rough surface than light oxide coatings, which may be seen by electron microscopy. Surface roughness may be measured from a profile line using BS EN IOS 4287:2000 to determine parameter Ra.

The oxide coating of the SMA wires may, for example, be made by heating the SMA wire in a gas comprising a source of oxygen (e.g. atmospheric air).

### Arrangement of the SMA Wires and Reinforcing Fibres

The term "SMA wires" as used herein refers to both SMA wires that have dark oxide coating and SMA wires that do not have a dark oxide coating (e.g. SMA wires having a light oxide coating) unless otherwise specified.

The SMA wires and reinforcing fibres may, for example, be arranged in a single ply (layer) or in two or more plys (layers). The terms ply and layer may be used interchangeably herein. Each ply may independently be one-dimensional (1D), two-dimensional (2D) or three-dimensional (3D). In certain embodiments, all plys in the composite material or preform may be 1D or all plys in the composite material or preform may be 2D or all plys in the composite material or preform may be 3D. Where the plys are 3D, the composite material or preform may preferably comprise a single ply. In certain embodiments, all the plys in the composite material or preform are preferably unidirectional.

Each ply may independently comprise SMA wires and/or reinforcing fibres. Where the composite material or preform claimed herein comprises only a single ply, said ply comprises at least SMA wires, wherein one or more of the SMA wires has a dark oxide coating. One or more plys in the composite material comprises SMA wires having a dark oxide coating. In certain embodiments, all plys in the composite material comprise SMA wires having a dark oxide coating.

The orientation of the plys relative to each other may be such so as to achieve the desired in-plane performance.

In the composite materials and preforms described herein, the SMA wires and/or reinforcing fibres may be held together by one or more stabilising threads, for example a light weight stabilising thread. In certain embodiments, the stabilising thread holds together the SMA wires and/or reinforcing fibres within a single ply. In certain embodiments, the stabilising thread holds together two or more plys.

The stabilising thread may, for example, consist of, or comprise, a polymer such as polyester. The stabilising thread may, for example, be a thermoplastic thread such as a polyester thread. The stabilising thread may, for example, be an aramid thread such as Kevlar^{®}. A stabilising thread is thread that does not affect the reinforcing or impact properties of the composite material or preform.

### One-Dimensional Plys

One-dimensional (1D) refers to plys in which the SMA wires and/or reinforcing fibres are not interlaced (e.g. woven) together in any way. This means that they do not cross and are not intricately linked together. Thus, in certain embodiments, the composite materials and preforms described herein comprise SMA wires and reinforcing fibres that are not woven together.

The SMA wires and/or reinforcing fibres may, for example, alternatively or additionally be described as being unidirectional (UD) in that they are arranged in the same direction. Thus, in certain embodiments, the composite materials and preforms described herein comprise unidirectional SMA wires and/or reinforcing fibres.

A stabilising thread may be woven into a one-dimensional and/or unidirectional ply to hold the SMA wires and reinforcing fibres together. A ply of this type is still one-dimensional provided the SMA wires and/or reinforcing fibres are not interlaced or woven together. For example, the stabilising thread may be woven into the ply in a warp direction, preferably only in a warp direction.

The stabilising thread may, for example, hold together the SMA wires and/or reinforcing fibres in one or more ply(s) (e.g. one or more unidirectional ply(s)). The stabilising thread may, for example, hold together two or more plys. Of the two or more plys held together by the stabilising thread, each ply may independently be unidirectional.

For example, the stabilising thread may form single-layered, biaxial, triaxial or quadriaxial fabric. For example, the stabilising thread may form layers of non-crimp fabric (NCF) or non-crimp woven fabric (NCW). In non-crimp fabric, the fibres and/or wires of each layer can be positioned at any angle relative to each other. In non-crimp woven fabric, the fibres and/or wires of each layer can be positioned at 0° or 90° relative to each other.

The term unidirectional as used herein indicates the reinforcing fibres and wires are parallel or substantially parallel and run in a single direction in a given ply or layer or the majority thereof run in a single direction in a given ply or layer, and that there is no or minimal or reduced out of plane displacement of the fibre and/or wires. However, the term "unidirectional" is well understood in the field of composite materials. There may be a small number of fibres or other material which run in a direction other than the single direction referred to. The main intention of these other fibres or secondary fibres (or other material) may be to hold the primary fibres in place, although the secondary fibres may also afford some structural integrity or properties for the composite material. By "out of plane" is meant the main plane of a given ply. Out of plane displacement may be measured. More particularly, out of plane displacement may be measured in relation to the tensile strength. If the wires are completely aligned then the tensile strength will be at its maximum or ultimate value.

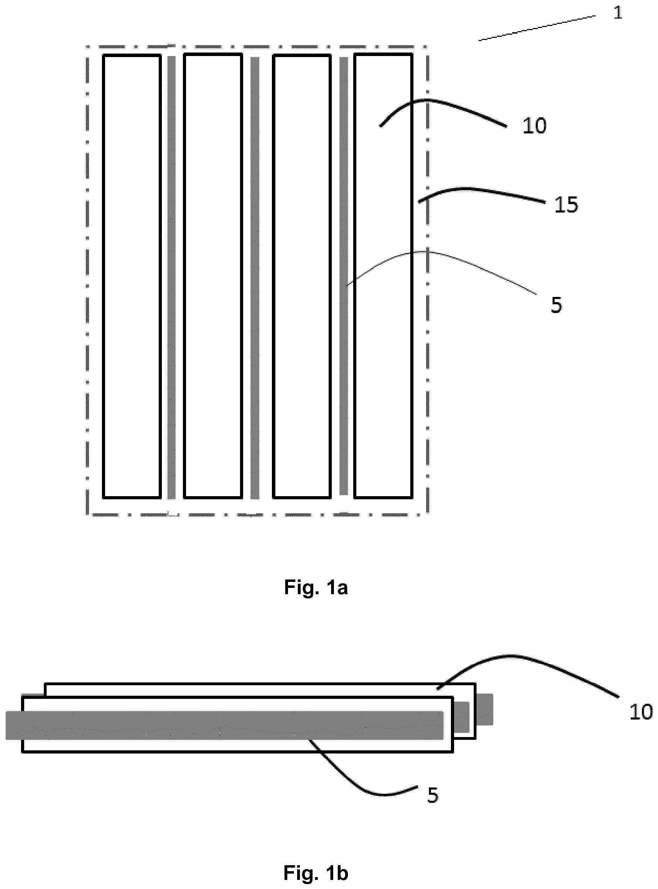

Figure 1a shows a cross-sectional illustration of an embodiment of a composite material including a 1D preform. In Figure 1a, the composite material is indicated generally at (1). The composite material comprises reinforcing fibres (or tows of reinforcing fibres) (10) and shape memory alloy in the form of wires (5). The wire(s) (5) are at the lateral edge(s) of the reinforcing fibre(s) (10). In the embodiment shown, each wire may be said to be associated with a particular reinforcing fibre. The number of wires associated with a particular reinforcing fibre may be 1 or 2 or 3 and the number may vary from tow to tow. In a given composite structure, the number of wires associated with any given reinforcing fibre may be 1 or 2 or 3. The reinforcing fibres (10) and wires (5) are embedded in a polymer matrix (15). Figure 1a is a plan view of a single ply. The reinforcing fibres (10) and shape memory alloy in the form of wires (5) are shown running in a single (uni) direction. This is further illustrated in Figure 1b which is a side view of the composite material shown in Figure 1a. For ease of reference, the reinforcing fibre (10) and SMA wire (5) are shown in the absence of polymer.

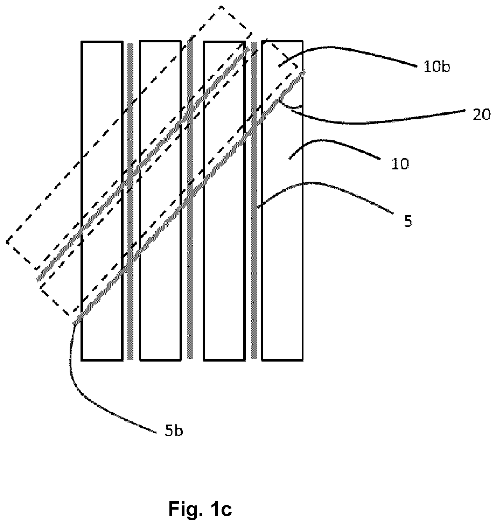

Figure 1c shows a cross sectional illustration of an embodiment of the composite material comprising two plies. For clarity, the polymer matrix, indicated at (15) in Figure 1 is not shown. The second ply or layer, positioned underneath the first ply and shown in dotted lines (partly), comprises reinforcing fibres (10b) and shape memory alloy in the form of wires (5b). The reinforcing fibres (10b) and wires (5b) are also embedded in the polymer matrix (15). The angle the second layer or ply makes with respect to the first ply is indicated at (20). The composite material may be made of many plies and the angle (20) may vary from layer to layer or between two adjacent layers (or plys) within a composite material. When there is variance in direction between two adjacent layers, the angle indicated at (20) may range from > 0° up to about 179° and be any value in between i.e. any value which is greater than 0° and up to and including about 179° (or less than 180°). The angle indicated at (20) may be 0° when comparing any two adjacent or non adjacent layers.

In Figures 1a, 1b and 1c, the fibres and wires in a given layer (or ply) are not woven with fibres or wires in a different layer (or ply).

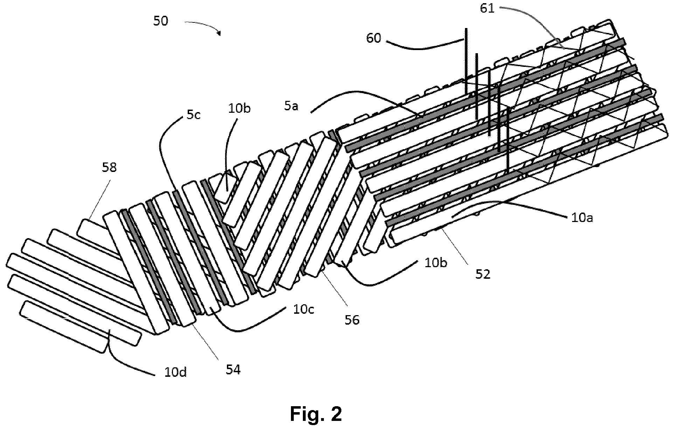

Figure 2 shows a preform material in the form of a non-crimp fabric possessing four layers and showing an example of a quadriaxial fabric. In Figure 2, the preform is indicated generally at 50. The preform shown comprises four layers or plies indicated at 52, 54, 56 and 58. Two of the four layers in the embodiment shown comprise essentially the same arrangement of fibres and wires. In each of the layers 52 and 54 the wires are indicated at 5a and 5c respectively and the fibres indicated at 10a and 10c. The layers 52 and 54 are shown staggered in relation to one another and at an angle of 90°. Layers 56 and 58 comprise tows of fibres (10b, 10d). As a representative layer, reference may be made to layer or ply 52. The arrangement of wires and fibres is essentially that described in connection with Figure 1a. Figure 2 shows how the orientation of the unidirectional fibres and wires in a given layer may vary when compared to adjacent layer(s) or non-adjacent layers. In Figure 2, the SMA wires are shown positioned at the lateral edge of fibre tows. Non-crimp fabric materials or multiaxial fabrics or preform materials more generally may consist of or comprise single ply uniaxial, two ply biaxial, three ply triaxial or four ply quadriaxial arrangements. SMA wires may be incorporated in any of the layers positioned at the lateral edge(s) of the fibres. In Figure 2, wires are shown in two of the layers. Multiple layers or plies of non-crimped fabric may be referred to as blankets which may be stacked and impregnated with resin which may then be cured to form the composite material. The stitching location is illustrated at (60) stitches hold together the layers with a thin yarn or thread (61). This is typically carried out on a machine which is based on a knitting process, such as those made by Liba, Malimo and Mayer. The stitching pattern and tension can be controlled and changed in order to vary the precision with which the fibres are laid down, particularly in maintaining the fibres parallel relative to each other or substantially parallel. These knitting machines comprise a frame which simultaneously draws in fibres for each axis/layer until the required layers have been assembled and then stitches them together.

### Two-Dimensional Plys

A two-dimensional (2D) ply refers to a ply in which at least some (e.g. all) of the SMA wires and/or reinforcing fibres are interlaced (e.g. woven) together to form a single unitary two-dimensional structure or structure that has a single plane. Thus, in certain embodiments, the composite materials and preforms described herein may comprise SMA wires and/or reinforcing fibres that are interlaced (e.g. woven) together to form a two-dimensional structure or structure that has a single plane.

The preforms and composite materials described herein may comprise a single 2D ply. Alternatively, the preforms and composite materials described herein may comprise two or more 2D plys. In some embodiments, the two or more 2D plys may be connected by one or more SMA wires and/or reinforcing fibres to form a 3D ply as described herein.

The SMA wires and/or reinforcing fibres in the 2D ply may, for example, be woven, braided or knitted. The structure of each ply (e.g. non-interlaced, woven, braided, knitted, 3D) in the composite material and preforms described herein may, for example, be the same or different. In certain embodiments, all of the plys in the composite materials and preforms described herein are non-interlaced. In certain embodiments, all of the plys in the composite materials and preforms described herein are woven. In certain embodiments, all of the plys in the composite materials and preforms described herein are braided. In certain embodiments, all of the plys in the composite materials and preforms described herein are knitted. In certain embodiments, all of the plys in the composite materials and preforms described herein are 3D.

The term "woven" means that the layer is made by a weaving process involving the interlacing of at least two sets of fibres according to a particular pattern. For example, a woven layer may consist of two sets of fibres (sometimes referred to as warp and weft) that lie perpendicular to each other in the layer plane. For example, a woven layer may consist of three sets of fibres (sometimes referred to as +warp, -warp and filling) or four sets of fibres that are interlaced in the layer plane. For example, the woven layer may be a biaxial or triaxial or quadriaxial woven layer.

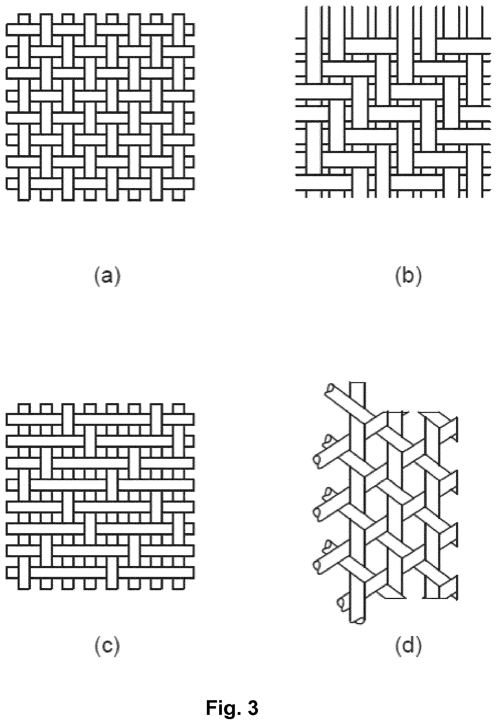

The woven layer may, for example, be made according to any suitable pattern. For example, the woven layer may have a uniform plain pattern in which the fibre in one direction (e.g. warp) passes alternatively over and under each fibre that lies perpendicular to it (e.g. weft). For example, the woven layer may have a twill pattern in which the fibre that lies in one direction (e.g. warp) passes over and under two or more fibres that lie perpendicular to it (e.g. weft). In the twill pattern, the weaving of each fibre in one direction may be started at a different point along the fibres lying perpendicular to it in order to give the woven layer a diagonal pattern. For example, the woven layer may have a satin pattern in which the fibre in one direction (e.g. warp) alternatively pass over and under two or more fibres that lie perpendicular to it (e.g. weft). Woven layers with fewer intersections (e.g. fewer places where fibres are passed over or under) may have a smoother surface and lower crimp and will also have better wettability and drapability. However, woven layers with fewer intersections may also have lower dimensional stability. Figure 3 shows examples of a plain (figure 3(a)), twill (figure 3(b)) and satin (figure 3(c)) pattern in a 2D woven layer. The woven layer may, for example, be biaxial or triaxial. Figure 3(d) shows a triaxial woven pattern.

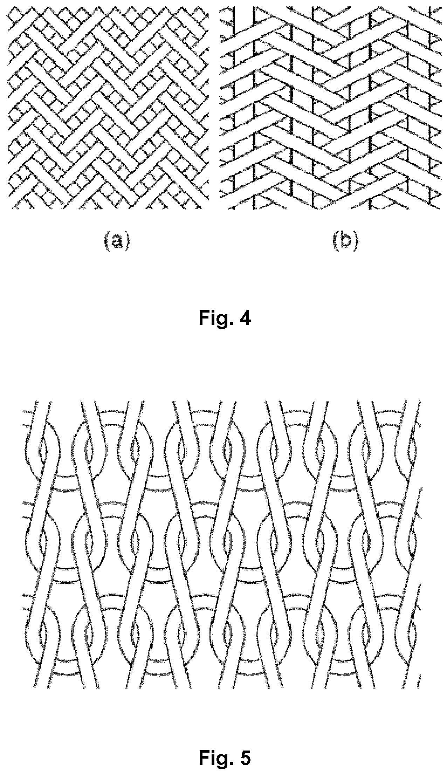

The term "braided" means that the layer is made by a braiding process involving the interlacing of a single set of fibres according to a particular pattern. A braided layer may, for example, be a layer consisting of braiding fibres crossing each other in a diagonal direction to the selvedge. The fibre density may, for example, be even. The layer may, for example, have a closed fabric appearance. The braid pattern may, for example, be a diamond, regular or hercules braid. For example, the braided layer may be a biaxial or triaxial braided layer. Figure 4 shows examples of a biaxial braided layer (Figure 4(a)) and a triaxial braided pattern (Figure 4(b)).

The term "knitted" means that the layer is made by a process involving the interloping of loops of fibre. Adjacent rows or columns of connected loops may also be connected to each other. Thus, a knitted layer may, for example, consist of two or more consecutive rows of interlocking loops. The knitted layer may, for example, be uniaxial or biaxial. Figure 5 shows an example of a knitted pattern.

### Three-Dimensional Plys

A three-dimensional (3D) ply refers to a ply in which at least some (e.g. all) of the SMA wires and/or reinforcing fibres are interlaced (e.g. woven) together to form a single unitary three-dimensional structure or structure with more than one plane. Thus, in certain embodiments, the composite materials and preforms described herein may comprise SMA wires and/or reinforcing fibres that are interlaced (e.g. woven) together to form a three-dimensional structure or structure with more than one plane.

The 3D ply may comprise multiple wires and/or fibres that are disposed in a three-mutually-perpendicular-planes relationship. The 3D ply may have a third dimension such that the X (longitudinal) and Y (cross) fibres/wires are linked (e.g. intertwined, interlaced or intermeshed) with a Z (vertical) direction wire/fibre. The Z direction fibre/wire can be positioned in any direction outside the X/Y 2D plane.

The preforms and composite materials described herein may comprise a single 3D ply. Alternatively, the preforms and composite materials described herein may comprise two or more 3D plys.

The 3D ply may, for example, comprise two or more 1D and/or 2D plys as described herein that are stacked on top of each other and held together by one or more filaments transversing two or more of the 1D and/or 2D plys. The precise number of plys used may vary depending on the thickness of each ply and the intended application of the composite material or preform.

In certain embodiments, the 3D ply comprises 3 or more, or 4 or more, or 5 or more, or 6 or more, or 7 or more, or 8 or more, or 9 or more, or 10 or more, 1D and/or 2D plys that are stacked on top of each other. In certain embodiments, the 3D ply comprises up to about 100, or up to about 90, or up to about 80, or up to about 70, or up to about 60, or up to about 50, or up to about 40, or up to about 30, or up to about 20, 1D and/or 2D plys that are stacked on top of each other. In certain embodiments, the 3D ply comprises from about 4 to about 30 plys that are stacked on top of each other. In certain embodiments, the 3D ply comprises from about 20 to about 30 plys that are stacked on top of each other. By "stacked on top of each other" it is meant that each layer is arranged such that the major planes of each layer are substantially parallel to each other.

When stacked, the direction of the reinforcing fibres and/or SMA wires in each layer relative to the direction of the reinforcing fibres and/or SMA wires in adjacent layers is arranged depending on the performance requirements for the particular fabric or composite material. In certain embodiments, the layers are stacked such that the reinforcing fibres and/or SMA wires in each layer are parallel to the reinforcing fibres and/or SMA wires in one or both adjacent layers. In certain embodiments, the layers are stacked such that the reinforcing fibres and/or SMA wires in each layer are substantially perpendicular to the reinforcing fibres and/or SMA wires in one or both adjacent layers.

The one or more filament(s) transversing two or more of the plys may sometimes be referred to as the z-yarn, warp weaver or binder yarn (particularly for 3D woven plys). The one or more filament(s) extend through the thickness of the 3D-ply connecting the layers. The one or more filament(s) may, for example, extend through the entire thickness of the 3D-ply or may each extend between only certain layers. Each of the layers of the 3D-ply must have at least one filament extending therethough in order to hold all of the layers of the 3D-ply together.

In certain embodiments, the one or more filament(s) transversing two or more of the plys are each independently reinforcing fibre, SMA wire or a combination thereof. For example, all of the one or more filament(s) transversing two or more of the plys are reinforcing fibre, SMA wire or a combination thereof. In certain embodiments, one or more of the one or more filament(s) transversing two or more of the plys is/are reinforcing fibre. In certain embodiments, all of the one or more filament(s) transversing two or more of the plys are reinforcing fibre. In certain embodiments, the reinforcing fibre is carbon fibre, for example tows of carbon fibre. In certain embodiments, one or more of the one or more filament(s) transversing two or more of the plys is/are SMA wire. In certain embodiments, all of the one or more filament(s) transversing two or more of the plys are SMA wires.

Where the filament(s) are a combination of reinforcing fibre and SMA wire, each reinforcing fibre or SMA wire may be inserted through the plys separately to the other reinforcing fibres and SMA wires. Each filament may, for example, be in the form of tows (bundles of reinforcing fibres or bundles of SMA wires that are not intertwined). Where the filament(s) comprise a combination of reinforcing fibre and SMA wire, the filament(s) may comprise combination tows, which each comprise one or more reinforcing fibres and one or more SMA wire. The combination tows may, for example, comprise a tow of reinforcing fibres with one or more SMA wires embedded therein.

In certain embodiments, the one or more filament(s) may independently transverse 3 or more, or 4 or more, or 5 or more, or 6 or more, or 7 or more, or 8 or more, or 9 or more, or 10 or more, plys in the 3D-preform. In certain embodiments, the one or more filament(s) may all transverse 3 or more, or 4 or more, or 5 or more, or 6 or more, or 7 or more, or 8 or more, or 9 or more, or 10 or more, plys in the 3D-preform. In certain embodiments, the one or more filament(s) may independently transverse up to about 100, or up to about 90, or up to about 80, or up to about 70, or up to about 60, or up to about 50, or up to about 40, or up to about 30, or up to about 20, plys in the 3D-preform. In certain embodiments, the one or more filament(s) may all transverse up to about 100, or up to about 90, or up to about 80, or up to about 70, or up to about 60, or up to about 50, or up to about 40, or up to about 30, or up to about 20, plys in the 3D-preform. In certain embodiments, the one or more filament(s) may independently transverse all of the plys in the 3D-preform (i.e. 100% of the plys in the 3D-preform from one surface to the other). In certain embodiments, the one or more filament(s) may all transverse all of the plys in the 3D-preform (from one surface to the other).

In certain embodiments, each of the one or more filament(s) may transverse the same or a different number of plys in total. Each of the one or more filament(s) may independently transverse the same or different plys within the 3D-preform. For example, each filament may transverse two plys in total but transverse subsequent pairs of plys (e.g. the first filament may transverse the first and second plys, the second filament may transverse the second and third plys etc).

In certain embodiments, each of the one or more filament(s) transversing two or more of the plys of the 3D ply may independently be woven, braided, stitched, tufted or z-pinned. In other words, each of the one or more filament(s) transversing two or more of the plys of the 3D ply are inserted into the structure by weaving, braiding, stitching, tufting or z-pinning. In certain embodiments, all of the one or more filament(s) transversing two or more of the plys of the 3D ply are woven. In certain embodiments, all of the one or more filament(s) transversing two or more of the plys of the 3D ply are braided. In certain embodiments, all of the one or more filament(s) transversing two or more of the plys of the 3D ply are stitched. In certain embodiments, all of the one or more filament(s) transversing two or more of the plys of the 3D ply are tufted. In certain embodiments, all of the one or more filament(s) transversing two or more of the plys of the 3D ply are z-pinned.

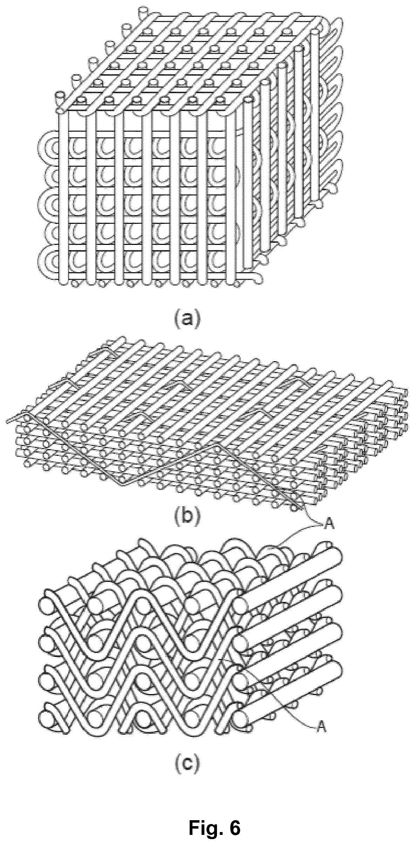

Thus, in certain embodiments, the 3D ply is a 3D woven ply. The 3D woven ply may, for example, be a 3D woven interlock ply or a 3D orthogonal woven ply. The 3D woven interlock ply may be a 3D angle-interlock woven ply or a 3D layer-to-layer interlock woven ply. These plys are semi-interlaced in that the one or more filament(s) transversing two or more plys of the 3D ply are not interlaced within the plys but are only laid-in orthogonally between the plys. In 3D woven preforms, the plys may consist of non-interlaced fibres/wires. Figure 6 shows an example of a 3D orthogonal weave pattern (Figure 6(a)), a 3D angle-interlock weave pattern (Figure 6(b)) and a 3D layer-to-layer weave pattern (Figure 6(c)).

In 3D orthogonal woven plys, the fibres are oriented in three orthogonal directions and are interlaced to one another. In 3D angle-interlock woven plys the one or more filament(s) each or all extend diagonally in a repeating pattern through all of the plys of the preform (i.e. from one surface to the other) and back to hold all of the plys together. The one or more filament(s) are thus in a zig-zag pattern through the cross-section of the 3D ply. The filaments transversing the layers of the preform in Figure 6(b) are in a zig-zag pattern (see, for example, the filament labelled A). In layer-to-layer interlock woven plys the one or more filament(s) each or all repeatedly extend from one ply to one or more adjacent plys and back but not through all of the plys of the preform. For example, in layer-to-layer interlock woven plys the one or more filament(s) each or all extend from one plys to one adjacent plys and back. In layer-to-layer interlock woven plys multiple filaments are required to hold all of the plys together. The filaments transversing the layers of the preform in Figure 6(c) each hold two layers together (see, for example, the filaments labelled A).

Stitching involves inserting the one or more filament(s) through two or more of the plys of the 3D-preform in one direction and then back through the same two or more plys in the opposite direction via a different trajectory/pathway. In certain embodiments, one or more of the stitches are inserted through all of the plys of the 3D-preform. In certain embodiments, all of the stitches are inserted through all of the plys of the 3D-preform. Unlike tufting, each stitch (loop) cannot be pulled back through the material.

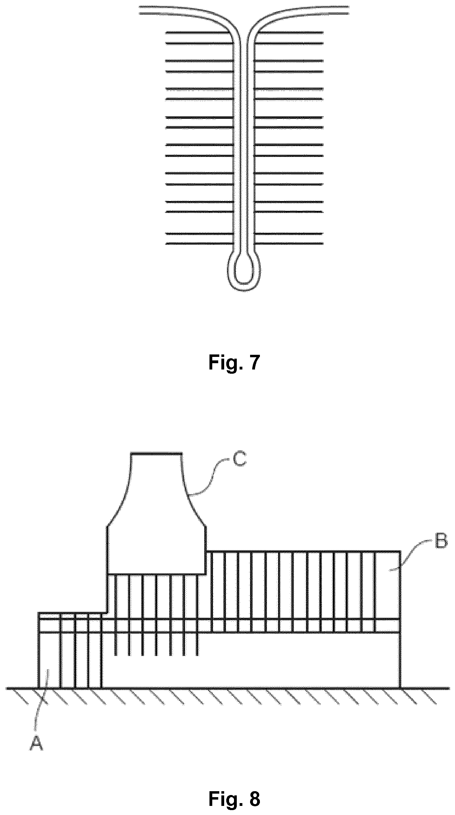

Tufting involves inserting the one or more filament(s) through two or more of the plys of the 3D ply in one direction and then back through the same two or more plys in the opposite direction via the same trajectory. In certain embodiments, one or more of the filament(s) are inserted through all of the plys to leave a loop of the filament(s) on the surface of the 3D plys. In certain embodiments, all of the one or more of the filament(s) are inserted through all of the plys to leave a loop of the filament(s) on the surface of the 3D ply. In certain embodiments, one or more (e.g. all) of the filament(s) are inserted partially through the plys to leave a loop of the filament(s) in the 3D ply. The loop on the surface of the 3D ply is not locked in place and only remains in position due to frictional forces acting on it. In certain embodiments, the one or more tufted filament(s) may each independently be cut to remove the loop. Tufting may be continuous, in which the tufts are made using a continuous thread and each tuft (loop) is linked to the next tuft. Alternatively, tufting may be discontinuous, in which the tufts are made using separate threads and the tufts are not linked. In contrast to stitching, each tuft could be pulled back through the material. Figure 7 shows an example of tufting.

Z-pinning involves inserting the one or more filament(s) through two or more of the plys of the 3D ply. Each filament extends only once through the two or more plys of the 3D ply. In certain embodiments, each of the one or more filament(s) may independently be inserted through all of the plys of the 3D ply. In certain embodiments, all of the one or more filament(s) are inserted through all of the plys of the 3D ply. In certain embodiments, one or more (e.g. all) of the filament(s) are inserted partially through the plys of the 3D ply. Figure 8 shows an exemplary method of z-pinning in which A is the uncured stack of layers of reinforced fibres and/or SMA wires, B is the z-pin preform and C is an ultrasonic hammer.

Numerous methods of z-pinning may be used. In certain embodiments, the one or more filament(s) are inserted from a foam bed by pressure and/or acoustic vibration into a 3D ply which may or may not be partially or fully embedded in an uncured polymer matrix.

In certain embodiments, the 3D ply is a fully-interlaced structure in that three or more sets of fibres (e.g. three orthogonal sets of fibres) are interlaced to form a 3D structure. This may, for example, particularly apply to braided and knitted materials.

The fully-interlaced 3D ply may, for example, be a fully-interlaced woven 3D ply, a fully-interlaced braided 3D ply or a fully-interlaced knitted 3D ply.

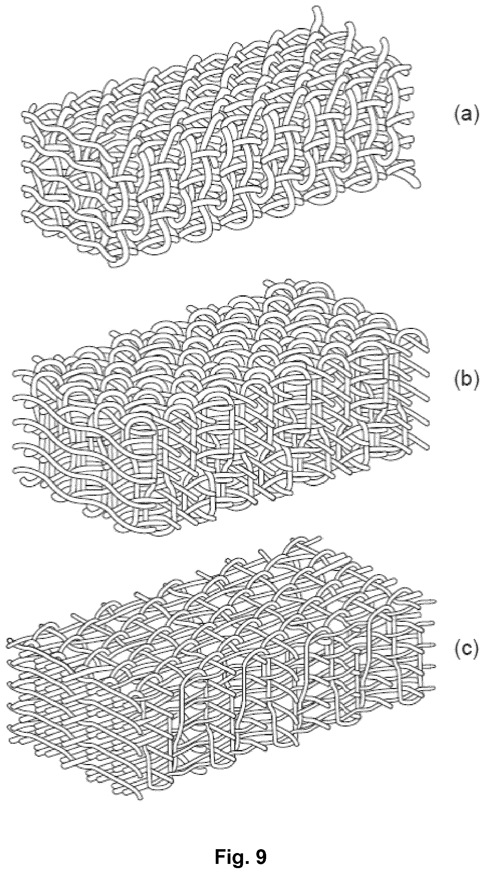

In fully-interlaced woven 3D plys, warp yarns may be interlaced with weft yarns at each layer based on the weave pattern in the in-plane principal directions, whereas z-yarns may be interlaced with warp yarns at each layer based on weave pattern in the out-of-plane principal directions. The fully-interlaced woven 3D ply may, for example, have a fully plain, fully twill or fully satin pattern. The fully-interlaced woven 3D-preform may be a circular fully-interlaced woven 3D ply. In order to form a circular fully-interlaced woven 3D ply, circumferential yarns may be interlaced with axial yarns at each circular layer based on the weave pattern in the circumferential direction, whereas radial yarns may be interlaced with axial yarns at each layer based on the weave pattern in the radial direction. The circular fully-interlaced woven 3D ply may have a fully plain, fully twill or fully satin pattern. The fully-interlaced woven 3D ply may be a multiaxis woven preform. The multiaxis woven fabric may, for example, consist of 4 or 5 sets of fibres. Figure 9 shows an example of (a) fully-interlaced plain woven preform, (b) fully-interlaced twill woven preform and (c) fully-interlaced satin woven preform.

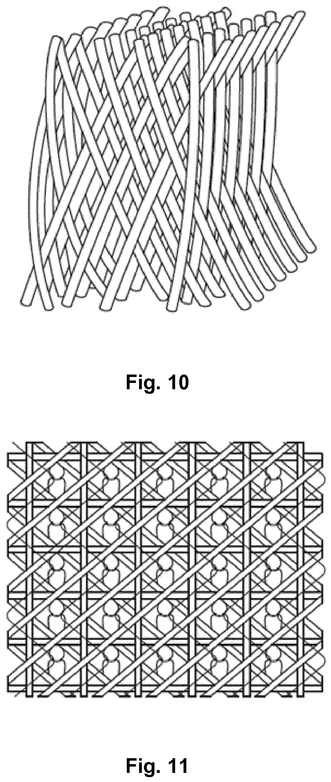

A fully-interlaced braided 3D ply may, for example, be a multiaxis braided preform. Figure 10 shows an example of a fully-interlaced braided perform. A fully-interlaced knitted 3D-preform may, for example, be a multiaxis knitted preform. Figure 11 shows an example of a fully-interlaced knitted preform.

The 3D ply may, for example, have any suitable thickness depending on the intended use of the ply. In certain embodiments, the 3D ply has a thickness ranging from about 1 mm to about 800 mm. For example, the 3D ply may have a thickness ranging from about 1 mm to about 700 mm or from about 1 mm to about 600 mm or from about 1 mm to about 500 mm or from about 1 mm to about 400 mm or from about 1 mm to about 300 mm or from about 1 mm to about 200 mm or from about 1 mm to about 100 mm. For example, the 3D ply may have a thickness ranging from about 1 mm to about 90 mm or from about 1 mm to about 80 mm or from about 1 mm to about 70 mm or from about 1 mm to about 60 mm or from about 5 mm to about 50 mm or from about 10 mm to about 45 mm or from about 20 mm to about 40 mm.

### Polymer Matrix

The composite materials described herein comprise a cured polymer matrix in which the SMA wires and reinforcing fibres are embedded. The preforms described herein may or may not comprise a polymer resin that has not been cured. A preform comprising a polymer resin that has not been cured may be referred to as a prepreg material.

The matrix material in the composite material, (and resin in a prepreg material) according to the invention may be of any of the usual types employed in fibre reinforced polymer (FRP) composites. For example, the matrix material (or precursor or prepolymer thereof) may be a thermosetting resin or a thermoplastic resin, although thermosets are currently preferred due to their lower processing temperatures which imply fewer constraints on the transformation temperature of the SMA which is incorporated.

In certain embodiments, the polymer matrix is (or formed from) an epoxy (resin), an acrylic (resin), a polyester, a polyvinyl ester, a polyurethane, a phenolic (resin), an amino (resin), a furan (resin), a bismaleimide (resin), a cyanate ester (resin), a polyimide (resin), a phthalonitrile (resin) or a polysilazane (resin).

In certain embodiments, the polymer matrix is (or formed from) an epoxy (resin). The final cured version of the epoxy resin may be referred to as a polyepoxide. In embodiments of the invention, the polymer may consist of or consist essentially of or comprise any one of the listed polymers. The poymer matrix may consist of or consist essentially of or comprise any combination of the listed polymers.

The polymer resin may be applied to a preform as described herein and cured to make a composite material as described herein. For example, the preform may be infused with resin. Infusion may be achieved using resin transfer moulding (RTM) or any of the other known infusion techniques. The resin may be applied using moulding methods such as injection moulding. The resin may be applied using moulding methods such as injection moulding, or infusion processes such as resin transfer moulding. A preform material combined with a polymer material that is not cured may be referred to as a prepreg material.

The polymer resin may be cured using standard techniques for curing said polymers. For example, the resin may be cured using any one or combination of heat and UV radiation for appropriate time until curing is complete. The resin may be cured for an appropriate time until curing is complete. Curing may take place at room temperature.

Curing may comprise the use of an autoclave curing method or an out of autoclave curing method. For example, curing may comprise the use of autoclave ramp and curing temperatures and conditions. These temperatures and conditions may be consistent with the manufacturing method defined by the manufacturer of a resin system. Typically, a resin manufacturer will provide a datasheet which includes details of a suitable cure cycle. By way of example, the curing conditions for a commercially available prepreg material are provided below and relate to the use of an epoxy resin and unidirectional or woven fibres of carbon fibre or glass fibre and is cured in the presence of an amine curing agent. These conditions are suitable for use in the present invention.

Example curing conditions:
1. Apply full vacuum (1 bar).
2. Apply 7 bar gauge autoclave pressure.
3. Reduce the vacuum to a safety value of 0.2 bar when the autoclave pressure reaches approximately 1 bar gauge.
4. Heat at 1- 3°C/min (2-8°F/min) to 110°C ± 5°C (230°F ± 9°F)
5. Hold at 110°C ± 5°C (230°F ± 9°F) for 60 minutes ± 5 minutes.
6. Heat at 1-3°C/min (2-8°F/min) to 180°C ± 5°C (356°F ± 9°F)
7. Hold at 180°C ± 5°C (356°F ± 9°F) for 120 minutes ± 5 minutes.
8. Cool at 2 - 5°C (4-9°F) per minute
9. Vent autoclave pressure when the component reaches 60°C (140°F) or below.

Typically, the pre-cured materials may be exposed to heat and/or light of an appropriate wavelength at the same time that they are laid onto a substrate or shortly thereafter. Pressure may also be applied during curing. Pressure may be applied using a vacuum such as via the use of a vacuum bag. The polymer resin may comprise a catalyst and/or curing agent in order to assist with curing. For example, the curing agent may be, or comprise, an amine compound, for example an aromatic or aliphatic amine compound. The pre-cured materials may be used to form the composite material in accordance with the present invention using a hand lay-up technique.

A prepreg material as described herein may, for example, be cut to suitable dimensions to form a tape. The tape may possess a width of equal to or less than about 8cm, for example less than about 6.5cm, or less than about 5cm or less than about 3cm. The tape may be at least about 3mm wide. The tape may possess or consist of a single layer or ply of prepreg material. Typically, the tape may be formed or prepared on a substrate such as paper or polymer which is provided as backing. The substrate, e.g. paper or polymer, is removed prior to the tape being deposited on a surface or a mould.

### SMA Wire

The SMA wires may also be referred to herein as SMA fibres. Where the specification generally refers to the fibres in each layer, this may include reinforcing fibres and SMA wires. Where the specification generally refers to SMA wires or fibres, this may include SMA wires having a dark oxide coating and SMA wires that do not have a dark oxide coating.

The wire may be of any type which offers the stress-strain characteristics of a shape memory alloy system. More particularly, such alloys may be formulated such that the capacity of the wires to absorb strain energy at the operating temperature or range of operating temperature of the respective material is maximised. The alloys may be formulated such that the capacity of the wires to absorb strain energy at the operating temperature or range of the operating temperature of the respective material may be due to either of the known hysteretic responses of martensitic twinning (shape memory effect) or martensitic transformation (superelasticity) or a combination of the two.

Advantageously, the alloy may be mainly or solely in the martensitic twinning form. This may be when in operation and/or comprised in an article in accordance with the present invention.

The currently preferred alloy is of the Ti-Ni type (nitinol) although other candidates may include ternary alloys Ti-Ni-Cu, Ti-Ni-Nb or Ti-Ni-Hf, copper-based SMAs such as Cu-Zn-AI, Cu-AI-Ni, Cu-AI-Zn-Mn, Cu-AI-Ni-Mn or Cu-AI-Mn-Ni or iron-based SMAs such as Fe-Mn-Si, Fe-Cr-Ni-Mn-Si-Co, Fe-Ni-Mn, Fe-Ni-C or Fe-Ni-Co-Ti. In certain embodiments, all SMA wires in the composite material or preform are the same alloy.

The alloy may be suitably heat treated to obtain the desired response. The SMA wires may be of a composition and in a proportion to substantially enhance the impact resistance of the composite at a predetermined operating temperature or range thereof. The volume fraction of the SMA wires in the composite material may typically be in the range about 2-40 vol% or about 2-25 vol%, or about 12 vol% to about 40 vol%, or more particularly about 3-12 vol%.

The SMA wires may be arranged to lie at the lateral edge of a reinforcing fibre tow. The wires may be arranged so that they lie in the same plane as the reinforcing fibres, thus not contributing to any increase in, (or minimising), ply thickness in the main plane of any given ply.

Each SMA wire may, for example, have a diameter ranging from about 50 µm to about 1000 µm. For example, each SMA wire may have a diameter ranging from about 100 µm to about 900 µm or from about 100 µm to about 800 µm or from about 100 µm to about 700 µm or from about 100 µm to about 600 µm or from about 100 µm to about 500 µm or from about 100 µm to about 400 µm or from about 100 µm to about 300 µm. Each SMA wire may, for example, have a diameter ranging from about 200 µm to about 300 µm. For example, each SMA wire may have a diameter ranging from about 210 µm to about 290 µm or from about 220 µm to about 280 µm or from about 230 µm to about 270 µm or from about 240 µm to about 260 µm. Each SMA wire may, for example, have a diameter ranging from about 100 µm to about 300 µm. The SMA wire or wires may be of a circular cross-section.

In a variant of the invention, the SMA wires are not of circular cross-section but have an elliptical, oval, or otherwise "flattened" cross-section which is substantially longer in a first dimension than in a second dimension perpendicular to the first. The non-circular cross-section SMA wires may, for example, be woven into layers of the 3D-preform with the longer dimension generally parallel to the plane of the layer. SMA wires with a flattened cross-section may particularly be used such that the SMA wires have the same or smaller thickness as the reinforcing fibres without reducing the amount of SMA that is used in each wire. It may, for exmaple, be particularly advantageous to use flattened SMA wires to obtain thin layers.

Where the SMA wire has an elliptical, oval or otherwise flattened cross-section, the SMA wire may have a major cross-sectional diameter ranging from about 200 µm to about 400 µm or from about 260 µm to about 340 µm or from about 270 µm to about 330 µm or from about 280 µm to about 320 µm. The SMA wire may, for example, have a minor cross-sectional diameter ranging from about 100 µm to about 250 µm or from about 260 µm to about 340 µm or from about 270 µm to about 330 µm or from about 280 µm to about 320 µm. Compared to circular wires of the same cross-sectional area this may achieve a reduction in the overall thickness of the preform material and associated prepreg material and composite material.

Similarly, for a given thickness, a single flat wire may have the same volume of SMA as a combination of two or more circular wires, but should be tougher due to the greater homogeneous volume. There may also be cost advantages as, per unit volume of SMA material, the single wire should be cheaper to produce.

The SMA wires will normally function in a purely passive sense, in that they are not intended to change shape in response to temperature change in use of the respective structure and no means are provided for deliberately applying an electrical voltage to the wires or otherwise initiating their thermal transformation, in contrast to known active structures which employ heated SMA elements to impart motion or apply a force.

The SMA wires will also not normally be prestrained within the preform material. However either of those measures may be employed. For example, it might be possible to temporarily repair a damaged structure or avoid catastrophic failure by reversing its deformation by heating. Other functionality may also be exhibited in the passive role; for example the SMA wires may impart enhanced damping or other energy absorbing properties to the structure or provide lightning strike protection or other electrical bonding.

### Reinforcing Fibre

The reinforcing fibres may be any of the usual (non-SMA) types employed in fibre reinforced polymer (FRP) composites. In certain embodiments, the reinforcing fibres have a tensile modulus in excess of 50 GPa. In certain embodiments, the reinforcing fibres have a tensile modulus equal to or greater than about 60 GPa or equal to or greater than about 80 GPa or equal to or greater than about 100 GPa or equal to or greater than about 120 GPa or equal to or greater than about 140 GPa or equal to or greater than about 150 GPa or equal to or greater than about 160 GPa or equal to or greater than about 180 GPa. In certain embodiments, the reinforcing fibres have a tensile modulus in excess of 200 GPa. Tensile modulus may, for example, be measured by ASTM D3379.

In certain embodiments, the reinforcing fibres may be selected from carbon fibres (CF), (including graphite), glass fibres, aramid fibres (e.g. Kevlar ^{®}), (high modulus) polyethylene fibres, boron fibres or a combination thereof. In certain embodiments, the reinforcing fibres are one of carbon fibres (including graphite), glass fibres, aramid fibres (e.g. Kevlar ^{®}), high modulus polyethylene fibres and boron fibres. In certain embodiments, the reinforcing fibres are carbon fibres. The reinforcing fibres may be selected from one or any combination of the listed fibres.

In certain embodiments, carbon fibres have a tensile modulus equal to or greater than about 200 GPa, for exmaple ranging from about 200 GPa to about 400 GPa or from about 200 GPa to about 300 GPa. In certain embodiments, glass fibres and/or aramid fibres (e.g. Kevlar^{®}) and/or ultra high molecular weight polyethylene fibres have a tensile modulus equal to or greater than about 50 GPa, for example ranging from about 50 GPa to about 200 GPa or from about 50 GPa to about 150 GPa or from about 50 GPa to about 100 GPa.

The reinforcing fibres may, for example, be carbon fibres having a diameter ranging from about 5 µm to about 10 µm, for example from about 6 µm to about 9 µm, for example from about 7µm to about 8 µm.

The reinforcing fibres may, for example, be present in tows (untwisted bundles of fibres). The tows may, for example, comrpise from about 1000 (1k) to about 50,000 individual fibres (e.g. 48k). For example, the tows may comprise from about 1000 to about 40,000 or from about 1000 to about 30,000 or from about 1000 to about 20,000 or from about 1000 to about 10,000 or from about 2000 to about 9000 or from about 3000 to about 8000 or from about 4000 to about 7000 individual fibres. The dimensions and number of fibres mentioned herein is applicable to any of the fibres used in connection with the present invention and is not limited to carbon.

### Use and Articles of Manufacture

There is also provided herein the use of the composite materials and preforms described herein to make an article of manufacture. There is also provided herein articles of manufacture made from or comprising the composite materials and preforms described herein.

In certain embodiments, the article of manufacture is a part for a vehicle. In certain embodiments, the article of manufacture is a part for an aircraft, a marine craft or an automobile.

In certain embodiments, the article of manufacture is a forward-facing part of a vehicle. The article may be selected from a part of a vehicle, such as an aircraft, including a wing or a part of a wing, for example a leading edge of a wing or a wing panel. The article may form part of an aero engine, for example be comprised in a nacelle. In certain embodiments, the article of manufacture is a leading edge, nose cone or nacelle. In certain embodiments, the article of manufacture is a leading edge of an aircraft wing.

In certain embodiments, the article of manufacture is a protective cover. In certain embodiments, the article of manufacture is a protective cover for a battery, a protective cover for a fuel tank or a protective cover for a braking system.

### Methods of Manufacture

There is further provided herein methods of making the preforms, prepreg materials and composite materials described herein. Conventional FRP composite fabrication methods may be employed.

The methods may, for example, comprise making a preform embedded in an uncured polymer matrix and curing the polymer matrix. For example, the method may comprise stacking plys of preforms embedded in an uncured polymer matrix and curing the polymer matrix.

The methods may, for example, comprise making a preform, applying a polymer matrix to the preform and curing the polymer matrix with the 3D-preform embedded therein.

### Methods of making the SMA wires having dark oxide coating

The oxide coating of the SMA wires may, for example, be made by heating the SMA wire in a gas comprising a source of oxygen (e.g. atmospheric air). For example, the oxide coating of the SMA wires may take place at a temperature ranging from about 400°C to about 600°C or from about 450°C to about 550°C, for example about 500°C. The level of oxygen in the atmosphere in which the SMA wires are heated may vary depending on the desired level of oxide in the coating. The oxide coating of the SMA wire may, for example, be formed during heat straightening of the SMA wire. After formation, part or all of the oxide coating may be removed by etching. The SMA wires having an oxide coating may also be treated by pickling and/or mechanically polishing.

### Methods of making the preform

There is further provided herein methods of making a preform according to any aspect or embodiment described herein. The method comprises arranging SMA wires into a preform structure, wherein one or more of the SMA wires has a dark oxide coating. In certain embodiments, the preform further comprises reinforcing fibres and the method comprises arranging SMA wires and reinforcing fibres into a preform structure, wherein one or more of the SMA wires has a dark oxide coating.

The SMA wires and optional reinforcing fibres may be arranged by any suitable method to get the desired arrangement. For example, the SMA wires and optional reinforcing fibres may be arranged into a 1D, 2D or 3D structures as described herein.

The 1D preforms described herein may be made by drawing fibres, for example from a spool or spools and aligning the fibres so that all or substantially all of the fibre tows run parallel or substantially parallel to one another. SMA wires may be positioned between the tows of reinforcing fibres and along the lateral edge of the tows of reinforcing fibres. Typically, one, two or three SMA wires may be positioned next to any given fibre tow.

Dry preforms (preforms that do not comprise any polymer resin) comprising at least one or greater than one ply may be made using a non-crimped woven method or a non-crimped fabric manufacturing method. The terminology "non-crimped woven" is intended to indicate that though an element of weaving is introduced into the structure, the reinforcing fibres and SMA wires remain unwoven in that they retain their unidirectional nature, i.e. there is no, or minimal, change in the primary direction of the fibres and wires in an out of ply plane direction. The term unidirectional as used herein indicates the reinforcing fibres and wires are parallel or substantially parallel and run in a single direction (said fibres and wires may be referred to herein as primary fibres and wires), in a given ply or layer or the majority thereof run in a single direction in a given ply or layer, and that there is no (or minimal) out of plane displacement of the fibre and/or wires. There may be a small number of threads or other material which may run in a direction other than the single direction, the main intention of these other threads or secondary fibres may be to hold the primary fibres in place. By "out of plane" is meant the main plane of a given ply. Out of plane displacement may be measured and, more specifically, may be measured in relation to the tensile strength. If the wires are completely aligned (and there is no, or minimal, crimping), then the tensile strength will be at its maximum or ultimate value.

The non-crimped woven or fabric structures may be made as follows. Layers or plys of non-crimp woven which may be dry (or pre-impregnated with resin if the intention is to form a prepreg material) may be stacked to form a multi-ply structure. Each ply relative to the next ply immediately adjacent may be orientated to provide the desired in-plane structural properties. Once the required number of layers or plies is stacked, the material may be cured to form a composite material for those structures which are pre-impregnated or for those structures which are dry, impregnated with a resin system, for example using injection moulding, and then cured to form a composite material.

2D preforms may, for example, be made by one or more of weaving, braiding and knitting using methods known to those skilled in the art. The 2D-preform may, for example, be made using the existing apparatus for weaving, braiding and knitting. The existing apparatus may, for example, be adapted depending on the particular desired 2D-preform to be made.

3D preforms may also be made by one or more of weaving, braiding, knitting, stitching, tufting and z-pinning. The 3D-preform may, for example, be made using existing apparatus for weaving, braiding, knitting, stitching, tufting and z-pinning. The existing apparatus may, for example, be adapted depending on the particular desired 3D-preform to be made.

In certain embodiments, a 3D-preform may be made by stacking layers of 1D and/or 2D arrangements of SMA wires and/or reinforcing fibres and inserting one or more filament(s) transversing two or more of the layers to make a 3D-preform. Each layer may or may not be pre-impregnated with polymer resin. The one or more filament(s) transversing two or more layers may be inserted before or after polymer matrix is applied to the layers. The polymer resin is cured after the one or more filament(s) transversing two or more of the layers has/have been inserted. In certain embodiments, the one or more filament(s) transversing two or more of the layers are inserted by stitching, tufting or z-pinning. In certain embodiments, the one or more filament(s) transversing two or more of the layers are inserted by z-pinning. In certain embodiments, the method comprises making a preform by stacking layers of reinforcing fibres, SMA or a combination thereof, inserting one or more filament(s) transversing two or more of the layers to make a 3D-preform, applying a polymer matrix, and curing the polymer matrix. In certain embodiments, the one or more filament(s) transversing two or more of the layers are inserted by stitching, tufting or z-pinning. In certain embodiments, the one or more filament(s) transversing two or more of the layers are inserted by z-pinning.

### Methods of making prepreg materials and composite materials

The prepreg and composite materials described herein may comprise making a preform material as described herein and applying a polymer resin to the preform material. The polymer resin is cured to make a composite material.

Alternatively, the SMA wires and/or reinforcing fibres that form the preform material may be coated with a polymer resin before they are arranged into a preform structure. Additional polymer resin may or may not be then applied to the preform structure. The polymer resin is cured to make a composite material.

The resin may be applied using a solvent based process or a hot melt process. In the hot melt process, there are typically two stages. The first stage of the process may comprise coating a thin film of the heated resin on to a substrate, e.g. a paper or polymer substrate. The substrate may be referred to as a backing. The fibres, SMA wires and resin (which may be present on the substrate) may be combined in a prepreg machine. On application of heat and pressure, the resin is impregnated into the fibre resulting in the formation of the prepreg which may be subsequently wound on a core, effectively for storage prior to being used for forming or coating an article. In forming or coating an article, the substrate or backing is removed and the prepreg positioned on the article in any desired number of layers and cured to form the composite material.

Tape may be considered as falling under the more general term of prepreg material in so far as tape is prepreg material possessing a certain range of dimensions, typically in connection with thickness and width. Tape is typically provided on a substrate or backing such as a polymer backing or a paper backing. The backing may be referred to herein as a substrate. The backing is removed prior to the tape being applied to an article and cured during or following application. Tape in accordance with the present invention is generally taken to mean a prepreg material possessing a single ply and width in the range of about 3mm to less than or equal to about 8cm.

The polymer resin may, for example, be cured by any suitable method, for example by any method described herein.

### Methods of making articles of manufacture

Any suitable method may be used to make the articles of manufacture described herein.

The composite material and/or prepreg material in accordance with the present invention are particularly suitable for use in tape or fibre laying processes. For example, the materials in accordance with the invention are particularly useful in automatic tape laying (ATL) and automatic fibre placement (AFP) techniques.

Automated tape laying (ATL) and automated tape placement (ATP) are processes that use computer guided robotics to lay one or several layers of prepreg material in the form of a tape onto a mold or substrate to create a structure or article or part thereof. The prepreg material is laid and then cured to form a polymer composite material.

In a typical ATP or ATL technique, prepreg plys of material containing a mixture (or preform) of reinforcing fibres and SMA wires may be produced using a fabrication line. SMA wire(s) may be fed from a roll or spool and aligned and combined into a single layer, ply or lamina, along with reinforcing fibres which may be supplied from a separate spool or roll. Alignment of the SMA wires and reinforcing fibres may be such that they form alternating rows of SMA wires and reinforcing fibres that are then combined with a flexible film of resin supplied from a further spool or roll. The single layer of fibres and wires may be pressed onto a resin film, for example, by further rollers and subsequently passed over a heating element which heats the resin film to its free-flowing temperature. Consolidation rollers may be used to impregnate the melted resin film onto the arrangement of fibres and wires in order to form a prepreg tape that may be taken up on to a spool. The prepreg tape may then be applied to an article and cured.

The composite materials in accordance with the invention may be made using an automated fibre placement (AFP) technique.

An automated fibre head placement device comprising an AFP head component, which itself comprises a number of channels into which may be fed a number of fibres and SMA wires. The fibres are pre-coated or pre-impregnated in polymer resin and along with the wires are fed through the head which aligns the fibres and wires so that they exit in a unidirectional arrangement. The material exiting the section of the head is tacky or essentially in the form of a prepreg material and is placed on a mould or mould tool, for example using a roller. The AFP head aligns the SMA wires and fibres so that the SMA wires are positioned on or at the lateral edge of the fibre (e.g. carbon) tow. The gap between the tows and the wires may be as low as possible. At the time of laying or placement of the prepreg material, or shortly thereafter, the prepreg material is cured, e.g. by heat and/or UV. Alternatively, the preform can be infused using a resin infusion method such as injection moulding. The AFP apparatus may further comprise a cutting blade suitable for cutting SMA wires and mounted spools for the SMA wire which regulate the rate and amount of wire which is fed in to the AFP head component.

The foregoing broadly describes certain embodiments of the present invention without limitation. Variations and modifications as will be readily apparent to those skilled in the art are intended to be within the scope of the present invention as defined in and by the appended claims.

### EXAMPLES

### Example 1

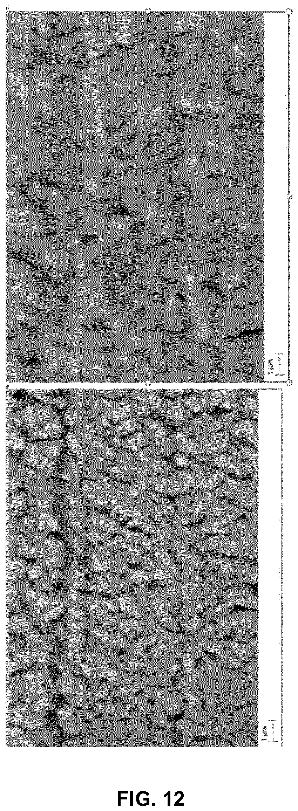

Ti-Ni SMA wires having a light oxide coating or dark oxide coating were visualized by SEM. The results are shown in Figure 12. The light oxide coated SMA wires have a more open surface whereas the dark oxide coated SMA wires have a smoother surface.

Elemental analysis of Ti-Ni SMA wires having a light oxide coating and dark oxide coating was undertaken using the semi-quantitative Edax technique using a Scanning Electron Microscope.

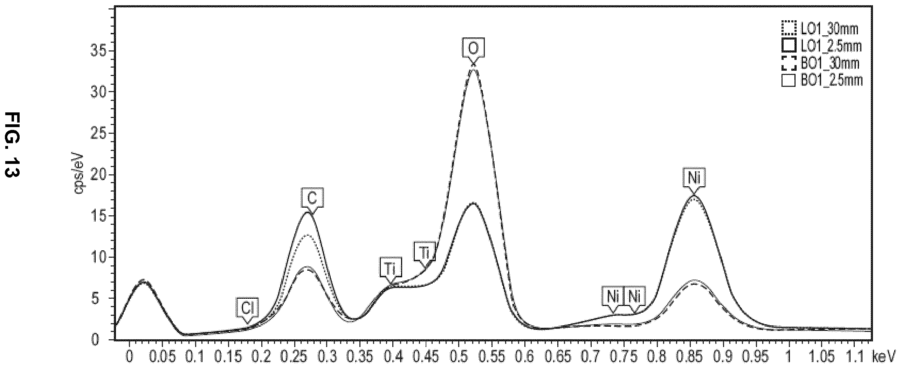

The results are shown in Figure 13. The results confirmed that the oxide coatings of both SMA wires were chemically similar but that the dark oxide coating has higher oxygen content, reflecting the increased thickness.

### Example 2

To investigate the possible effect the oxide coating has on its bond to the resin a series of tests were undertaken to pull single Ti-Ni SMA wires from blocks of epoxy resin.

Ti-Ni SMA wires having a diameter of 0.58 mm and either a dark oxide or light oxide coating were placed in pots of epoxy resin (Araldite^{®} 2011) to a depth of 5 mm and the resin was cured. The shear strength of the samples (calculation made from cross-sectional area and the load (N per m²)) was measured using a machine to pull the wire from the resin, which measures the force required in the process.

The tests demonstrated that the light oxide SMA wires produced a pull-out load (force required to pull the wire from the resin, as measured by the machine) around 6% greater than that for the dark oxide SMA wires for the same immersion depth. This difference is not considered to be significant. It is surprising that the difference in surface characteristics described in Example 1 above do not have a significant impact on the suitability of the dark oxide SMA wires to be used in composite materials. This is advantageous due to the ease of making dark oxide coated SMA wires compared to light oxide coated SMA wires.

SMA wires with a dark oxide coating can be produced at higher rates than wires with a light oxide coating, thus increasing the efficiency of manufacture. However, the SMA wires with a dark oxide coating have a reduced surface roughness compared to SMA wires with a light oxide coating. It was thought that the mechanical keying between the SMA wire and resin would be reduced and the impact and penetration resistance of the composite may thus also be reduced. However, the results shown herein surprisingly demonstrate that dark oxide SMA wires key sufficiently to resin to provide a composite with improved impact and penetration resistance.

## Claims

1. A composite material comprising a polymer matrix with reinforcing fibres and shape memory alloy (SMA) wires embedded therein, or a preform comprising shape memory alloy (SMA) wires wherein one or more of the SMA wires has a dark oxide coating wherein the oxide coating has an average thickness of at least about 2000 Angstroms and wherein the oxide coating of the SMA wires comprise one or more oxides of one or more of the metals from which the SMA wire is formed.

2. The composite material or preform of claims 1 wherein the composite material comprises a single ply or comprises two or more plys, each ply independently comprising SMA wires and/or reinforcing fibres.

3. The composite material or preform of any one of claims 1 or 2, wherein the SMA wires and reinforcing fibres are arranged to form one or more one-dimensional (1D) ply(s).

4. The composite material or preform of any one of claims 1 to 3, wherein the composite material comprises a single ply or comprises two or more plys, each ply independently comprising SMA wires and/or reinforcing fibres, wherein the SMA wires and/or reinforcing fibres in each of said ply or plys are arranged in a single direction.

5. The composite material or preform of claim 3 or 4, wherein the composite material comprises two or more plys, each ply comprising SMA wires and/or reinforcing fibres arranged in a single direction, wherein the single direction in at least two plys is different.

6. The composite material or preform of any one of claims 3 to 5, wherein the SMA wires and/or reinforcing fibres in each ply are held together by a thread, for example a polyester thread.

7. The composite material or preform of any one of claims 1 to 2, wherein the SMA wires and/or reinforcing fibres are interlaced to form one or more two-dimensional (2D) ply(s) or
wherein the SMA wires and/or reinforcing fibres are arranged to form one or more three-dimensional (3D) ply(s).

8. The composite material or preform of any one of claims 1 to 7, wherein the SMA wires are each independently of a composition and in a proportion to substantially enhance the impact performance or penetration resistance of the structure at a predetermined operating temperature or range thereof.

9. The composite material or preform of any one of claims 1 to 8, wherein each SMA wire is independently selected from the group consisting of Ti-Ni, Ti-Ni-Cu, Ti-Ni-Nb, Ti-Ni-Hf, Cu-Zn-Al, Cu-Al-Ni, Cu-AI-Zn-Mn, Cu-Al-Ni-Mn, Cu-Al-Mn-Ni, Fe-Mn-Si, Fe-Cr-Ni-Mn-Si-Co, Fe-Ni-Mn, Fe-Ni-C and Fe-Ni-Co-Ti alloys.

10. The composite material or preform of any one of claims 1 to 9 wherein the volume fraction of the SMA wires in the composite material ranges from about 2 % to about 25 %.

11. The composite material or preform of any one of claims 1 to 10, wherein the reinforcing fibres each independently have a tensile modulus in excess of 50 GPa, for example in excess of 200 GPa.

12. The composite material or preform of any one of claims 1 to 11, wherein the reinforcing fibres are each independently selected from carbon fibres, glass fibres, aramid fibres (e.g. Kevlar^{®}), polyethylene fibres and boron fibres.

13. The composite material or preform of any one of claims 1 to 12, wherein the polymer matrix is formed from an epoxy resin, an acrylic resin, a polyester, a polyvinyl ester, a polyurethane, a phenolic resin, an amino resin or a furan resin.

14. The preform of any one of claims 1 to 13 wherein the preform is embedded in a polymer resin that has not been cured.

15. The preform of claim 14, wherein the polymer resin is an epoxy resin, an acrylic resin, a polyester, a polyvinyl ester, a polyurethane, a phenolic resin, an amino resin or a furan resin.

16. An article comprising a composite material or preform of any one of claims 1 to 15.

17. The article of claim 16, wherein the article is an aircraft structural component.

## Patentansprüche

1. Verbundmaterial umfassend eine Polymermatrix (15) mit Verstärkungsfasern (10) und Formgedächtnislegierungs-, SMA-, Drähten (5), die darin eingebettet sind, oder einen Vorformling umfassend Formgedächtnislegierungs-, SMA-, Drähte, wobei einer oder mehrere der SMA-Drähte eine dunkle Oxidbeschichtung aufweist, **dadurch gekennzeichnet, dass** die Oxidbeschichtung eine durchschnittliche Dicke von mindestens etwa 2000 Angström aufweist, und dadurch, dass die Oxidbeschichtung der SMA-Drähte ein oder mehrere Oxide eines oder mehrerer der Metalle, aus denen der SMA-Draht gebildet ist, umfassen.

2. Verbundmaterial oder Vorformling nach Anspruch 1, wobei das Verbundmaterial eine einzige Lage umfasst oder zwei oder mehr Lagen umfasst, wobei jede Lage unabhängig SMA-Drähte und/oder Verstärkungsfasern umfasst.

3. Verbundmaterial oder Vorformling nach einem der Ansprüche 1 oder 2, wobei die SMA-Drähte und Verstärkungsfasern so angeordnet sind, dass sie eine oder mehrere eindimensionale, 1D-, Lage(n) bilden.

4. Verbundmaterial oder Vorformling nach einem der Ansprüche 1 bis 3, wobei das Verbundmaterial eine einzige Lage umfasst oder zwei oder mehr Lagen umfasst, wobei jede Lage unabhängig SMA-Drähte und/oder Verstärkungsfasern umfasst, wobei die SMA-Drähte und/oder Verstärkungsfasern in jeder der Lage oder Lagen in einer einzigen Richtung angeordnet sind.

5. Verbundmaterial oder Vorformling nach Anspruch 3 oder 4, wobei das Verbundmaterial zwei oder mehr Lagen umfasst, wobei jede Lage SMA-Drähte und/oder Verstärkungsfasern umfasst, die in einer einzigen Richtung angeordnet sind, wobei die einzige Richtung in mindestens zwei Lagen unterschiedlich ist.

6. Verbundmaterial oder Vorformling nach einem der Ansprüche 3 bis 5, wobei die SMA-Drähte und/oder Verstärkungsfasern in jeder Lage von einem Faden, zum Beispiel einem Polyesterfaden, zusammengehalten werden.

7. Verbundmaterial oder Vorformling nach einem der Ansprüche 1 bis 2, wobei die SMA-Drähte und/oder Verstärkungsfasern verflochten sind, um eine oder mehrere zweidimensionale, 2D-, Lage(n) zu bilden
oder
wobei die SMA-Drähte und/oder Verstärkungsfasern so angeordnet sind, dass sie eine oder mehrere dreidimensionale, 3D-, Lage(n) bilden.

8. Verbundmaterial oder Vorformling nach einem der Ansprüche 1 bis 7, wobei die SMA-Drähte jeweils unabhängig von einer Zusammensetzung sind und in einem Verhältnis vorliegen, dass die Schlagleistung oder Durchdringungsbeständigkeit der Struktur bei einer vorbestimmten Betriebstemperatur oder einem Bereich davon wesentlich verbessert wird.

9. Verbundmaterial oder Vorformling nach einem der Ansprüche 1 bis 8, wobei jeder SMA-Draht unabhängig ausgewählt ist aus der Gruppe bestehend aus Ti-Ni-, Ti-Ni-Cu-, Ti-Ni-Nb-, Ti-Ni-Hf-, Cu-Zn-Al-, Cu-Al-Ni-, Cu-Al-Zn-Mn-, Cu-Al-Ni-Mn-, Cu-Al-Mn-Ni-, Fe-Mn-Si-, Fe-Cr-Ni-Mn-Si-Co-, Fe-Ni-Mn-, Fe-Ni-C- und Fe-Ni-Co-Ti-Legierungen.

10. Verbundmaterial oder Vorformling nach einem der Ansprüche 1 bis 9, wobei der Volumenanteil der SMA-Drähte in dem Verbundmaterial von etwa 2 % bis etwa 25 % reicht.

11. Verbundmaterial oder Vorformling nach einem der Ansprüche 1 bis 10, wobei die Verstärkungsfasern jeweils unabhängig einen Zugmodul von über 50 GPa, zum Beispiel von über 200 GPa, aufweisen.

12. Verbundmaterial oder Vorformling nach einem der Ansprüche 1 bis 11, wobei die Verstärkungsfasern jeweils unabhängig ausgewählt sind aus Kohlenstofffasern, Glasfasern, Aramidfasern, z. B. Kevlar^{®}, Polyethylenfasern und Borfasern.

13. Verbundmaterial oder Vorformling nach einem der Ansprüche 1 bis 12, wobei die Polymermatrix aus einem Epoxidharz, einem Acrylharz, einem Polyester, einem Polyvinylester, einem Polyurethan, einem Phenolharz, einem Aminoharz oder einem Furanharz gebildet ist.

14. Vorformling nach einem der Ansprüche 1 bis 13, wobei der Vorformling in einem Polymerharz eingebettet ist, das nicht ausgehärtet worden ist.

15. Vorformling nach Anspruch 14, wobei das Polymerharz ein Epoxidharz, ein Acrylharz, ein Polyester, ein Polyvinylester, ein Polyurethan, ein Phenolharz, ein Aminoharz oder ein Furanharz ist.

16. Artikel, umfassend ein Verbundmaterial oder einen Vorformling nach einem der Ansprüche 1 bis 15.

17. Artikel nach Anspruch 16 , wobei der Artikel eine Flugzeugstrukturkomponente ist.

## Revendications

1. Matériau composite comprenant une matrice polymère (15) avec des fibres de renforcement (10) et des câbles en alliage à mémoire de forme, AMF, (5) incorporés en elle, ou préforme comprenant des câbles en alliage à mémoire de forme, AMF, un ou plusieurs desdits câbles en AMF comportant un revêtement d'oxyde noir, **caractérisé en ce que** le revêtement d'oxyde présente une épaisseur moyenne d'au moins environ 2000 Angströms et **en ce que** le revêtement d'oxyde des câbles en AMF comprend un ou plusieurs oxydes d'un ou plusieurs des métaux à partir desquels est formé le câble en AMF.

2. Matériau composite ou préforme selon la revendication 1, ledit matériau composite comprenant une seule couche ou comprenant deux couches ou plus, chaque couche comprenant indépendamment des câbles en AMF et/ou des fibres de renforcement.

3. Matériau composite ou préforme selon l'une quelconque des revendications 1 ou 2, lesdits câbles en AMF et lesdites fibres de renforcement étant agencés pour former une ou plusieurs couche(s) unidimensionnelles, 1D.

4. Matériau composite ou préforme selon l'une quelconque des revendications 1 à 3, ledit matériau composite comprenant une seule couche ou comprenant deux couches ou plus, chaque couche comprenant indépendamment des câbles en AMF et/ou des fibres de renforcement, lesdits câbles en AMF et/ou lesdites fibres de renforcement dans chacune parmi ladite ou lesdites couches étant agencés suivant une seule direction.

5. Matériau composite ou préforme selon la revendication 3 ou 4, ledit matériau composite comprenant deux couches ou plus, chaque couche comprenant des câbles en AMF et/ou des fibres de renforcement agencés suivant une seule direction, ladite seule direction dans au moins deux couches étant différente.

6. Matériau composite ou préforme selon l'une quelconque des revendications 3 à 5, lesdits câbles en AMF et/ou lesdites fibres de renforcement dans chaque couche étant maintenus ensemble par un fil, par exemple un fil en polyester.

7. Matériau composite ou préforme selon l'une quelconque des revendications 1 à 2, lesdits câbles en AMF et/ou lesdites fibres de renforcement étant entrelacés pour former une ou plusieurs couche(s) bidimensionnelles, 2D ou
lesdits câbles en AMF et/ou lesdites fibres de renforcement étant agencés pour former une ou plusieurs couche(s) tridimensionnelles, 3D.

8. Matériau composite ou préforme selon l'une quelconque des revendications 1 à 7, lesdits câbles en AMF étant chacun indépendamment d'une composition et en une proportion pour sensiblement améliorer les performances aux impacts ou la résistance à la pénétration de la structure à une température de fonctionnement prédéfinie ou dans une plage de celle-ci.

9. Matériau composite ou préforme selon l'une quelconque des revendications 1 à 8, chaque câble en AMF étant indépendamment choisi dans le groupe constitué par les alliages Ti-Ni, Ti-Ni-Cu, Ti-Ni-Nb, Ti-Ni-Hf, Cu-Zn-Al, Cu-Al-Ni, Cu-Al-Zn-Mn, Cu-Al-Ni-Mn, Cu-Al-Mn-Ni, Fe-Mn-Si, Fe-Cr-Ni-Mn-Si-Co, Fe-Ni-Mn, Fe-Ni-C et Fe-Ni-Co-Ti.

10. Matériau composite ou préforme selon l'une quelconque des revendications 1 à 9, la fraction volumique des câbles en AMF dans le matériau composite allant d'environ 2 % à environ 25 %.

11. Matériau composite ou préforme selon l'une quelconque des revendications 1 à 10, lesdites fibres de renforcement présentant chacun indépendamment un module de traction supérieur à 50 GPa, par exemple supérieur à 200 GPa.

12. Matériau composite ou préforme selon l'une quelconque des revendications 1 à 11, lesdites fibres de renforcement étant chacune indépendamment choisies parmi les fibres de carbone, les fibres de verre, les fibres d'aramide, par ex. le Kevlar^{®}, les fibres de polyéthylène et les fibres de bore.

13. Matériau composite ou préforme selon l'une quelconque des revendications 1 à 12, ladite matrice de polymère étant formée à partir d'une résine époxy, d'une résine acrylique, d'un polyester, d'un ester de polyvinyle, d'un polyuréthane, d'une résine phénolique, d'une résine aminée ou d'une résine de furane.

14. Préforme selon l'une quelconque des revendications 1 à 13, ladite préforme étant incorporée dans une résine polymère qui n'a pas été durcie.

15. Préforme selon la revendication 14, ladite résine polymère étant une résine époxy, une résine acrylique, un polyester, un ester de polyvinyle, un polyuréthane, une résine phénolique, une résine aminée ou une résine de furane.

16. Article comprenant un matériau composite ou une préforme selon l'une quelconque des revendications 1 à 15.

17. Article selon la revendication 16, ledit article étant un composant structurel d'aéronef.
